# EUROPEAN PATENT APPLICATION

(11) **EP 4 734 225 A1**
(43) Date of publication of application: **29.04.2026**
(21) Application number: 24826194.3
(22) Date of filing: 14.06.2024
(51) Int. Cl.: H01M 10/54, B09B 3/35, B02C 23/08, C22B 3/00, C22B 15/00, B09B 101/16

(54) **RECYCLING METHOD OF CYLINDRICAL BATTERY**

(30) Priority: 20.06.2023 KR 20230079009
(71) Applicant: POSCO Holdings Inc., Pohang-si, Gyeongsangbuk-do 37859 (KR); POSCO Co., Ltd, Pohang-si, Gyeongsangbuk-do 37859 (KR)
(72) Inventor: HAN, Sangwoo, Pohang-si, Gyeongsangbuk-do 37859 (KR); PARK, Chonglyuck, Pohang-si, Gyeongsangbuk-do 37859 (KR); LEE, Juseung, Pohang-si, Gyeongsangbuk-do 37859 (KR); YOU, Kisung, Pohang-si, Gyeongsangbuk-do 37859 (KR); KIM, Wan-Yi, Pohang-si, Gyeongsangbuk-do 37859 (KR)
(74) Representative: Pfenning, Meinig & Partner mbB
(86) International application number: PCT/KR2024/008202
(87) International publication number: WO 2024/262876

(57) **Abstract**

The method for recycling a cylindrical battery according to the present invention comprises: preparing a cylindrical battery; forming at least one gas vent on a surface of the cylindrical battery; heating the cylindrical battery having the gas vent formed thereon; crushing the heated cylindrical battery to obtain a crushed product; and separating the crushed product to obtain a recovered material.

## Description

### [Technical Field]

The present invention relates to a method for recycling a cylindrical battery, and specifically, to a method for recycling a cylindrical battery by reducing it at a high temperature.

### [Background Art]

The problem of disposing of waste batteries for electric vehicles is emerging socially in countries around the world. Lithium ion batteries contain fire and/or explosive substances such as organic solvents, and heavy metal substances such as Ni, Co, Mn, and Fe. Among these, in the case of Ni, Co, Mn, and Li, the scarcity value as valuable metals is very great. Therefore, the process of discarding, and subsequently recovering and recycling lithium secondary batteries is becoming a very important matter.

Meanwhile, the structure of a battery for an electric vehicle can be divided into units of a cell, a module, and a pack. For example, cells of 2 to 4 V are connected in series/parallel to configure a module of 20 to 60 V, and several of these modules are connected in series to configure a pack.

The configuration of a lithium ion battery for an electric vehicle is mainly composed of, for example, Cu and Al used as a current collector; Li-Ni-Co-Mn-Fe-P oxide constituting a positive electrode material; and graphite utilized as a negative electrode material, and is composed of a separator separating the positive electrode material and the negative electrode material, and an electrolyte injected into the separator.

The electrolyte is, for example, a solvent and a salt, wherein the solvent is used by mixing carbonate organic materials such as ethylene carbonate/propylene carbonate, and the salt may mainly use LiPFL (Lithium hexafluorophosphate).

The operating principle of the lithium ion battery is as follows. When Li ions located in an oxide composed of Li-Ni-Co-Mn-Fe-P constituting the positive electrode material move to the negative electrode material as electrons move by an external charge, they move to the negative electrode material through the separator injected with the electrolyte located between the positive electrode material and the negative electrode material to satisfy charge neutrality, and are located in the graphite of the negative electrode material. This process becomes a charging process, and when electrons move to the positive electrode material through an external circuit in the opposite direction, Li ions move in the electrolyte to the oxide structure in the positive electrode material, which is referred to as a discharging process.

In this case, in the case of an NCM-based lithium ion battery, the positive electrode material is composed of Li-Ni-Co-Mn-O, and Al may be used for the current collector of the positive electrode material. The negative electrode material is C, and may be coated on a Cu current collector. When the temperature is raised to a high temperature of 700°C or higher in a state where the positive electrode material and the negative electrode material are overlapped, a reduction reaction by C occurs, and when raised to 1050°C or higher, Cu is melted, or when it becomes 1250°C or higher, Ni is melted and becomes an alloy state of surrounding Ni-Cu-Co-Mn-C. At this time, when the oxygen concentration during the reaction is 1000 ppm or more, the concentration of C in the alloy drops rapidly.

A conventional method for recycling a battery involves discharging a waste cylindrical battery, followed by crushing and grinding, recovering a black powder of Ni-Co-Mn-O from the resulting crushed material, and recovering valuable metals through acid treatment thereof. However, the cylindrical battery has an outer shell made of iron, which makes crushing difficult, and there is a problem in that the recovery rate is low because internal materials do not come out well even after crushing.

In addition, the existing high-temperature heat treatment method recovers the cylindrical battery by melting it at a high temperature of about 1500°C, but in this case, a problem occurs in that lithium is lost to some extent, and the iron outer shell of the cylindrical battery melts together, thereby causing a load on the subsequent acid treatment process.

Therefore, there is a demand for the development of a method for recycling a cylindrical battery capable of increasing the recovery rate and suppressing explosion due to electrolyte vaporization.

### [Detailed Description of the Invention]

### [Technical Problem]

The present invention is a measure for high-temperature reduction of a cylindrical battery, and intends to provide a method for recycling a cylindrical battery capable of suppressing explosion due to vaporization of an electrolyte in the cylindrical battery and increasing a recovery rate of a recovered material.

### [Technical Solution]

The present invention provides a method for recycling a cylindrical battery, comprising: preparing a cylindrical battery; forming at least one gas vent on a surface of the cylindrical battery; heating the cylindrical battery having the gas vent formed thereon; crushing the heated cylindrical battery to obtain a crushed product; and separating the crushed product to obtain a recovered material.

### [Advantageous Effects]

The method for recycling a cylindrical battery according to the present invention serves as a measure for high-temperature reduction of a cylindrical battery, capable of suppressing explosion caused by vaporization of an electrolyte within the cylindrical battery. In this case, by preventing overheating caused by explosion, volatilization of lithium, which begins at a temperature of 1300°C or higher, can be suppressed, thereby offering an advantage of increasing a recovery rate of a valuable metal.

### [Brief Description of Drawings]

FIG. 1 is a diagram illustrating a step of forming a hole in a cylindrical battery according to some embodiments of the present invention.
FIG. 2 is a graph showing a reduction rate according to a heating time of a cylindrical battery in a method for recycling a cylindrical battery according to some embodiments of the present invention.
FIGS. 3 and 4 are diagrams showing a crushed product and a recovered material obtained according to a method for recycling a cylindrical battery according to some embodiments of the present invention.

### [Mode for Carrying Out the Invention]

Hereinafter, embodiments of the present invention will be described in detail. However, these are presented as examples, and the present invention is not limited thereby, and is only defined by the scope of the appended claims.

In the present invention, when a member is referred to as being positioned "on" another member, this includes not only the case where the member is directly in contact with the other member but also the case where another member is interposed between the two members.

In the present invention, when a part is referred to as "comprising" a certain component, it means that it may further include other components rather than excluding other components, unless specifically stated to the contrary.

One aspect of the present invention relates to a method for recycling a cylindrical battery 1, comprising: preparing a cylindrical battery 1; forming at least one gas vent 2 on a surface of the cylindrical battery 1; heating the cylindrical battery 1 having the gas vent 2 formed thereon; crushing the heated cylindrical battery 1 to obtain a crushed product; and separating the crushed product to obtain a recovered material.

The applications of lithium secondary batteries are expanding widely from small electronic devices to automobiles. Major components of a lithium secondary battery consist of Ni, Co, Mn, and Li, and are composed of expensive elements. However, a lithium secondary battery reaches the end of its life as its chargeable capacity decreases after use for as short as 5 years to as long as 10 years. For such end-of-life lithium secondary batteries, reusing major components is essential from an environmental or cost perspective.

Therefore, in the present invention, as a measure for high-temperature reduction of a cylindrical battery 1, in order to suppress explosion caused by vaporization of an electrolyte within the cylindrical battery 1, the method includes the steps of forming at least one gas vent 2 on a surface of the cylindrical battery 1, heating the cylindrical battery 1 through induction heating or resistance heating, crushing the heated cylindrical battery 1, and then separating a crushed product to recover a recovered material.

### Step of Preparing Cylindrical Battery

The method for recycling a cylindrical battery 1 according to the present invention includes a step of preparing a cylindrical battery 1.

The cylindrical battery 1 may include an outer shell containing iron and may include a positive electrode material and a negative electrode material therein.

Specifically, the cylindrical battery 1 according to the present invention may include an outer shell containing iron. In short, the present invention may relate to a method for recycling a cylindrical battery 1 including an outer shell containing iron.

The cylindrical battery 1 may refer to a waste cylindrical battery.

In one embodiment of the present invention, when a thickness of the outer shell of the cylindrical battery 1 is 0.05 to 1 mm, the outer shell may include an alloy having an Fe content of 60 at% or more.

### Step of Forming At Least One Gas Vent on Surface of Cylindrical Battery

The method for recycling a cylindrical battery 1 according to the present invention includes a step of forming at least one gas vent 2 on the surface of the cylindrical battery 1.

In the process of heating the cylindrical battery 1, a problem may occur to some extent where the cylindrical battery explodes as the electrolyte vaporizes.

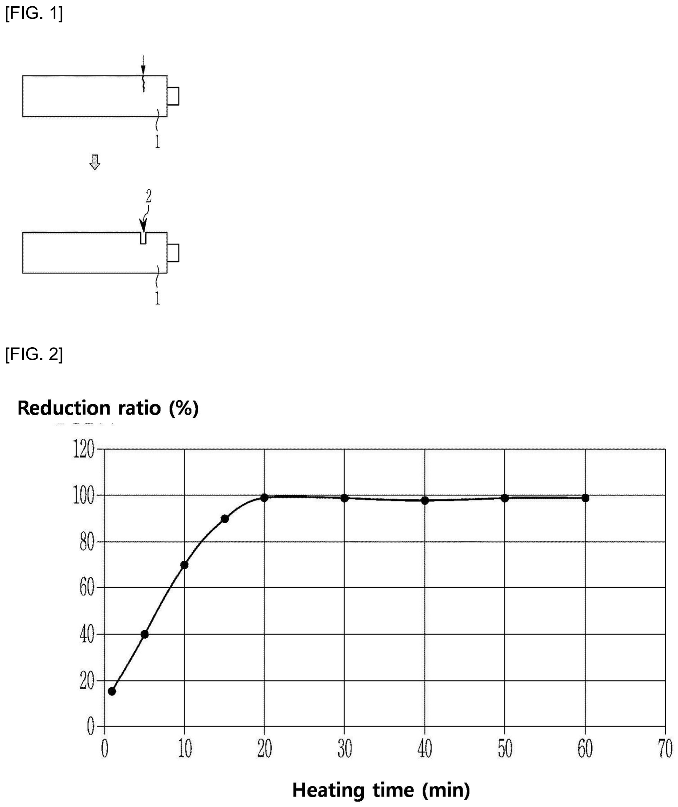

Referring to FIG. 1, the method for recycling a cylindrical battery 1 according to the present invention includes the step of forming at least one gas vent 2 on the surface of the cylindrical battery 1, thereby having an advantage of suppressing explosion through gas discharge.

Specifically, the surface of the cylindrical battery 1 includes at least one gas vent 2.

In the present invention, the "gas vent 2" may refer to a vent for discharging gas generated in the process of heating the cylindrical battery 1.

In another embodiment of the present invention, the step of forming the gas vent 2 may include forming at least one hole 2 on the surface of the cylindrical battery 1.

In another embodiment of the present invention, the step of forming the gas vent 2 may include a step of cutting a portion of the cylindrical battery 1.

In short, the gas vent 2 may be formed by forming at least one hole 2 in the cylindrical battery 1, or may be formed by cutting a portion of the cylindrical battery 1.

In another embodiment of the present invention, in the step of forming the hole 2, the hole 2 may be formed to have a cross-sectional area of 0.01 mm²or more.

In another embodiment of the present invention, the hole 2 may be formed to have a cross-sectional area of 0.1 to 10 mm², preferably 1 to 6 mm².

When the cross-sectional area of the hole 2 satisfies the above range, it is preferable because the formation of the hole 2 is easy while gas generated when heating the cylindrical battery 1 later can sufficiently escape.

In the present invention, a "hole" may mean having a three-dimensional space extending in a thickness direction of the cylindrical battery 1 from a figure having a two-dimensional shape included in the surface of the cylindrical battery 1.

A horizontal cross-section of the hole 2 on the surface of the cylindrical battery 1 may have one or more shapes selected from the group consisting of a circle and a polygon.

In short, a specific shape of the horizontal cross-section of the hole 2 is not limited as long as the cross-sectional area satisfies the above range.

In the present invention, a "hole" may be a term encompassing a pore, a gap, and/or a crack.

In the present invention, a "horizontal cross-section" may mean a plane cut in a direction parallel to the surface of the cylindrical battery 1 through which the hole 2 penetrates.

In the present invention, a "cross-sectional area of a hole" may mean a cross-sectional area of a horizontal cross-section included in the surface of the cylindrical battery 1 through which the hole 2 penetrates.

The cross-sectional area of the hole 2 may be measured as, for example, a product of maximum lengths in horizontal and vertical directions tangential to the thickness of the outer shell, but is not limited thereto.

For example, the cross-sectional area of the hole 2 may be measured after visual observation or imaging using an external length by various methods, but is not limited thereto.

The hole 2 may be formed to have a depth of 0.05 mm or more.

The hole 2 may be formed to have a depth of 0.1 to 1.5 mm, specifically 0.5 to 1 mm.

The hole 2 may penetrate the outer shell of the cylindrical battery 1, but is not limited thereto.

The hole 2 may penetrate the cylindrical battery 1, but is not limited thereto.

In the present invention, a "depth of a hole" may mean a vertical distance formed between a line segment and the surface of the cylindrical battery 1 when an arbitrary line segment is drawn with respect to a direction parallel to a horizontal direction of the cylindrical battery 1 from a bottom of the hole 2 extending in the thickness direction of the cylindrical battery 1 from the hole 2.

In another embodiment of the present invention, 1 to 40, preferably 2 to 30, and more preferably 2 to 15 gas vents 2 may be formed.

When the gas vents 2 are formed within the above range, it is preferable because the formation of the gas vent 2 is easy and process time can be reduced while the effect of suppressing explosion of the cylindrical battery is maximized.

In short, in the present invention, the gas vent 2 may be a passage through which gas, carbon dioxide, carbon monoxide, etc., generated by vaporization of the electrolyte or the like escape.

The gas vent 2 may be formed using a drill, a punch, a needle, a laser, a cutter, compression fracture, shear fracture means, etc., but is not limited thereto.

For example, it may be formed by pressing the outer shell of the cylindrical battery 1 at one or more locations with an awl to pierce the hole 2.

### Step of Heating Cylindrical Battery

The method for recycling a cylindrical battery 1 according to the present invention includes a step of heating the cylindrical battery 1 having the gas vent 2 formed thereon.

The step of heating the cylindrical battery 1 may be performed using induction heating utilizing an electromagnetic field, resistance heating, indirect heating utilizing gas, etc., but is not limited thereto.

In another embodiment of the present invention, the step of heating the cylindrical battery 1 may be performed at 700 to 1400°C.

Preferably, the step of heating the cylindrical battery 1 may be performed at 700 to 1300°C, more preferably 700 to 1100°C.

When the step of heating the cylindrical battery 1 is within the above temperature range, it is preferable because internal reduction sufficiently occurs. In addition, loss due to lithium vaporization can be suppressed, and sintering of alloy elements is excellent, which is preferable. Also, when heated within the above temperature range, the electrolyte inside the battery vaporizes, the separator turns into ash, and the total volume decreases by about 40% due to the reduction reaction. This provides an advantage in that separation of reactants inside the battery and iron constituting the outer shell becomes easy.

In another embodiment of the present invention, the step of heating the cylindrical battery 1 may be performed for 10 to 100 minutes. Preferably, it may be performed for 10 to 50 minutes, more preferably 10 to 30 minutes.

Specifically, the cylindrical battery 1 may be heated to the above temperature range and then maintained within the above temperature range.

When the step of heating the cylindrical battery 1 is performed within the above range, it is preferable because process time can be reduced while internal reduction reaction can sufficiently occur.

Specifically, the step of heating the cylindrical battery 1 may be performed such that a temperature value of a surface portion of the cylindrical battery 1 is 700°C or higher and 1400°C or lower, which is equal to or lower than a melting point of a surface material of the cylindrical battery 1, so that the internal reduction reaction can be performed smoothly.

More specifically, the step of heating the cylindrical battery 1 may be performed by heating for 10 minutes to 20 minutes such that the temperature value of the surface portion of the cylindrical battery 1 becomes 700 to 800°C so that the internal reduction reaction can be performed smoothly, and then raising the temperature value of the surface portion to 800 to 1400°C, preferably 1100 to 1400°C, more preferably 1150 to 1300°C so that sintering is excellent.

The step of heating the cylindrical battery 1 may be dry heat treatment. In short, the method for recycling a cylindrical battery 1 according to the present invention includes a heat treatment step of performing a high-temperature reduction reaction without undergoing a melting step.

In another embodiment of the present invention, the step of heating the cylindrical battery 1 having the gas vent 2 formed thereon may be performed using induction heating.

By using the induction heating, the temperature of the outer shell of the cylindrical battery 1 is increased.

The induction heating using an electromagnetic field may be performed using a high-frequency oscillator, and appropriate selection of induction heating frequency may be necessary according to the thickness of the outer shell of the cylindrical battery 1.

A frequency selection range according to the thickness of the outer shell and a radius of the cylindrical battery 1 may be required.

For example, the thickness of the outer shell of the cylindrical battery 1 may be 0.05 to 1 mm, and a range of maximum frequency can be determined using this.

In another embodiment of the present invention, a frequency of the induction heating may be 2.5 kHz to 3 MHz. Preferably, the frequency of the induction heating may be 2.5 kHz to 1500 kHz, more preferably 2.5 kHz to 600 kHz.

In short, the frequency of the induction heating may be appropriately selected according to the thickness of the outer shell and the radius of the cylindrical battery 1.

Specifically, the cylindrical battery 1 may have a diameter of 10 to 25 mm, preferably 15 to 20 mm, more preferably 18 to 20 mm.

A range of minimum frequency of the induction heating has a relationship with the radius of the cylindrical battery 1, and since it also affects internal temperature rise of the cylindrical battery 1, it is preferable to satisfy the above range in consideration of internal reaction rate, etc.

The step of heating the cylindrical battery 1 may be performed under an atmosphere of at least one gas among inert gas, carbon dioxide, carbon monoxide, and hydrocarbon gas, but is not limited thereto.

The inert gas may include, for example, one or more selected from the group consisting of argon and nitrogen, but is also not limited thereto.

When the step of heating the cylindrical battery 1 is performed under the above gas atmosphere, it is preferable because a valuable metal recovery alloy can be effectively recovered.

The method for recycling a cylindrical battery 1 according to the present invention may have a reduction rate of 70% or more, specifically 80% or more, more specifically 85% or more, and most specifically 90% or more.

### Step of Crushing Heated Cylindrical Battery to Obtain Crushed Product

The method for recycling a cylindrical battery 1 according to the present invention includes a step of crushing the heated cylindrical battery 1 to obtain a crushed product.

In another embodiment of the present invention, the method may further include a step of cooling the heated cylindrical battery 1 before the step of crushing the heated cylindrical battery 1 to obtain a crushed product.

When the method further includes the step of cooling the heated cylindrical battery 1, it is preferable because ignition of a liquid electrolyte contained in the cylindrical battery 1 can be suppressed and then a crushing process can be performed, thereby suppressing problems caused by electrolyte ignition.

Specifically, as a specific pressure is applied to the cylindrical battery 1 during the crushing process, a phenomenon where a separator is physically crushed to form a high current due to occurrence of a short circuit and generate a spark can be suppressed. Therefore, it is preferable to further include the step of cooling the heated cylindrical battery 1.

In another embodiment of the present invention, the method may further include a step of cutting a portion of the cylindrical battery 1 before the step of crushing the heated cylindrical battery 1 to obtain a crushed product.

Specifically, the step of cutting a portion of the cylindrical battery 1 may be performed between the step of cooling the heated cylindrical battery 1 and the step of crushing the heated cylindrical battery 1 to obtain a crushed product.

More specifically, when the gas vent 2 is in the form of a hole 2, the method may further include the step of cutting a portion of the cylindrical battery 1.

When the gas vent 2 is in the form of a hole 2, the crushed product can be recovered more easily by further including the step of cutting a portion of the cylindrical battery 1.

The cooling may be performed at room temperature.

The crushing may include breaking the cylindrical battery 1 by applying physical or mechanical force and pulverizing it into powder.

By crushing the cylindrical battery 1, large-sized impurities among impurities such as aluminum (Al), copper (Cu), iron (Fe), and plastics, i.e., black powder, can be separated.

The crushed product is a valuable metal recovery composition in which components such as nickel, cobalt, manganese, and lithium-containing oxides are alloyed, and may include a valuable metal and a residual amount of impurities.

In the present invention, "valuable metal" may mean an expensive metal component contained in a battery. For example, the valuable metal may mean nickel, cobalt, manganese, aluminum, copper, and lithium.

The valuable metal recovery composition may include, for example, aluminum (Al), manganese (Mn), lithium (Li), copper (Cu), cobalt (Co), nickel (Ni), carbon (C), and a residual amount of impurities, but is not limited thereto.

For example, the black powder may include 5 to 40% by weight of nickel (Ni), 1 to 20% by weight of cobalt (Co), 1 to 15% by weight of manganese (Mn), 0.5 to 5% by weight of lithium (Li), 10 to 70% by weight of carbon (C), 0.0001 to 20% by weight of aluminum (Al), and 0.0001 to 20% by weight of copper (Cu), and a total sum of impurities such as iron (Fe) and phosphorus (P) may be less than 10% by weight, but is not limited thereto.

The components of the black powder may vary depending on ratios of nickel, cobalt, and manganese, and when the lithium secondary battery is crushed, the nickel, cobalt, and manganese may be controlled by a positive electrode material oxide in the lithium secondary battery.

The crushing may be a crushing method using at least one of shear, compression, and tensile force.

For example, the crushing may be performed using one or more selected from the group consisting of a hammer mill, a ball mill, and an agitated ball mill.

The hammer mill may be performed as one or more steps selected from the group consisting of shredding, punching, and milling, but is not limited thereto, and may be performed using various types of crushing and/or grinding devices performed in the art.

For example, it may be performed using a crusher or an industrial grinder, but is not limited thereto.

The crushed product may have a particle size of 100 mm or less, specifically 30 mm or less, but is not limited thereto.

However, when the particle size of the crushed product satisfies the above range, it is preferable because recovery in a recovery step to be described later is easy.

The crushed product may be in a flake form, but is not limited thereto.

### Step of Separating Crushed Product to Obtain Recovered Material

The method for recycling a cylindrical battery 1 according to the present invention includes a step of separating the crushed product to obtain a recovered material.

In another embodiment of the present invention, the step of separating the crushed product to obtain a recovered material may be performed by one or more separation methods selected from the group consisting of particle size separation, magnetic separation, and specific gravity separation.

Specifically, the crushed product, for example, a valuable metal recovery alloy, may be separated by at least one method among particle size separation, magnetic separation, and specific gravity separation.

The particle size separation method separates according to a size or diameter of particles, and may include, for example, various methods of separating using a sieve, but is not limited thereto.

The magnetic separation method utilizes a magnetic material, and can separate particles through contact with the magnetic material, and various types of magnetic separation methods may be applied, but are not limited thereto.

The specific gravity separation is a method of separating particles in consideration of a difference in specific gravity for each substance. For example, particles can be separated based on high and low specific gravity of particles corresponding to a specific solvent using the specific solvent, and various types of specific gravity separation methods may be applied.

Iron contained in the outer shell of the cylindrical battery 1 can be removed by separating the crushed product.

Specifically, the iron can be removed using a method of recovering remaining iron after recovering the crushed product.

Removing the iron is preferable because load on a wet process, which is a subsequent process, can be minimized, and an amount of hydrochloric acid to be used in the wet process can be drastically reduced.

In another embodiment of the present invention, the step of separating the crushed product to obtain a recovered material may be performed by performing the magnetic separation first, and then performing the particle size separation.

By performing the magnetic separation first, it is preferable because loss of the valuable metal recovery alloy from the crushed product of 100 µm or less can be suppressed.

In another embodiment of the present invention, the step of separating the crushed product to obtain a recovered material may include all steps of performing the particle size separation, the magnetic separation, and performing the particle size separation and the magnetic separation together.

In the step of performing only the particle size separation, the valuable metal recovery alloy can be recovered only by the particle size separation for the valuable metal recovery composition in which the particle size of the crushed product is 100 µm to 100 nm or less.

In the case of the magnetic separation, when the crushed product contains a material having a particle size of 100 µm or less, the valuable metal can be recovered from the crushed product only by the magnetic separation.

In the case of the material of 100 µm or less, since the particle size is similar to that of carbon, a recovery rate of the valuable metal lost only by the particle size separation can be increased through the magnetic separation.

The step of separating the crushed product to obtain a recovered material may further include a step of separating from a lithium compound containing lithium.

Specifically, the step of separating the crushed product by at least one or more separation methods selected from the group consisting of particle size separation, magnetic separation, and specific gravity separation to obtain a recovered material may further include a step of separating from a lithium compound containing lithium.

The step of separating from a lithium compound containing lithium may be performed before or after the step of separating the crushed product by one or more separation methods selected from the group consisting of particle size separation, magnetic separation, and specific gravity separation.

The lithium compound may bind to a part of the surface of the valuable metal recovery alloy. The lithium compound bound to a part of the surface of the valuable metal recovery alloy can be separated by external force.

The lithium compound may be, for example, a lithium-containing oxide, and may be separated by physical external force, but is not limited thereto, and may be separated using a conventional method performed in the art.

By separating the lithium-containing oxide by physical external force, the recovery rate of lithium as well as the valuable metal can be increased.

In another embodiment of the present invention, the recovered material may include a valuable metal.

In short, the method for recycling a cylindrical battery 1 according to the present invention may relate to a method for recovering a valuable metal from a waste cylindrical battery 1.

In another embodiment of the present invention, the valuable metal may include one or more selected from the group consisting of nickel, cobalt, manganese, and copper.

Specifically, the recovered material may include a valuable metal alloy, and the valuable metal alloy may include one or more selected from the group consisting of nickel, cobalt, manganese, and copper.

In another embodiment of the present invention, the valuable metal may include nickel, cobalt, manganese, and copper.

Specifically, the valuable metal alloy may include nickel, cobalt, manganese, and copper.

In another embodiment of the present invention, the valuable metal may include one or more selected from the group consisting of carbon, copper, a lithium-aluminum-oxygen alloy, a lithium-fluorine alloy, and a lithium-carbon-oxygen alloy.

In another embodiment of the present invention, a magnetic valuable metal may be 40 parts by weight or more based on 100 parts by weight of the total valuable metal.

Specifically, the magnetic valuable metal may be 45 parts by weight or more based on 100 parts by weight of the total recovered valuable metal.

In the method for recycling a cylindrical battery 1 according to the present invention, since the cylindrical battery 1 is subjected to a high-temperature reaction as it is, a ratio of nickel, cobalt, manganese, and copper alloy is in a range of 25 to 70% of the total weight, and at this time, a lithium compound may be coated together on the surface of the alloy. When magnetic separation is performed, nickel, cobalt, manganese, and copper alloys and lithium compounds mainly emerge, and carbon may be partially included therein. What is magnetically separated into the above three materials is in a range of 50 to 70% by weight based on the total, and specifically may be 50 to 60%.

Here, the lithium compound is attached together to a surface portion of the alloy, so it is separated together when magnetically separated, but can be separated from the alloy by physical external force. The nickel, cobalt, manganese, and copper alloy may contain carbon in an amount of 0.1 to 7% by weight or less.

This is because contact with oxygen can be restricted as gas is discharged through the gas vent 2 in the cylindrical battery 1 in the existing reduction reaction, and thus oxygen in the atmosphere cannot burn carbon of the alloy, resulting in a high carbon content in the alloy.

In the magnetic separation, a weight ratio of a non-magnetic material is in a range of 25 to 40%, and specifically may be in a range of 25 to 35%. The non-magnetic material mainly includes a lithium compound and carbon, and may include some nickel, cobalt, manganese, and copper. Here, in the alloy of nickel, cobalt, manganese, and copper, copper may account for 50% by weight or more. In the non-magnetic material, carbon typically has a size of about 50 µm or less, and specifically may be 35 µm or less. The lithium compound has a size of 50 µm or more, and specifically may have a size of 75 µm or more.

The method for recycling a cylindrical battery 1 according to the present invention has an advantage in that by forming the gas vent 2 in the outer shell of the cylindrical battery 1 and then raising the temperature to reduce and recover the valuable metal of the positive electrode material inside the cylindrical battery 1, the cylindrical battery 1 can be recycled without disassembling it through a complex process as in the related art. In addition, there is an advantage in that explosion of the cylindrical battery 1 can be suppressed during the process, and a recovery rate, specifically a recovery rate of the valuable metal, can be increased.

Hereinafter, preferred examples and comparative examples of the present invention will be described. However, the following examples are only preferred examples of the present invention, and the present invention is not limited to the following examples.

### Experimental Example

An 18650 cylindrical battery (diameter 18 mm, height 65 mm) was prepared. Two holes having a diameter of 0.5 mm were pierced in the outer shell using an awl.

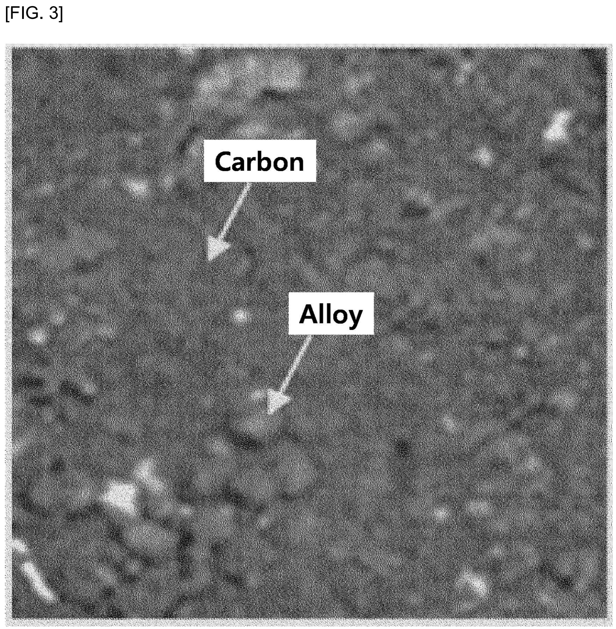

Thereafter, induction heating was performed at 700°C for 10 minutes, and after heating to 1300°C, cooling was performed by air cooling. Then, an upper portion of the battery was cut and crushed to obtain a crushed product in a powder form (see FIG. 3).

At this time, a frequency of 2.5 kHz was used.

Table 1 below is a table showing minimum and maximum frequency test results according to the thickness of the outer shell of the cylindrical battery during induction heating.

The test was conducted by performing a temperature rise test according to the thickness of a pipe while changing the frequency using a pipe made of iron containing 70% or more of Fe. In a case where the thickness was thick, if the frequency was set too high, only the surface was heated and melted, making temperature control difficult. In a case where the thickness was thin, if the frequency was too low, heating was not performed well in some cases. It was confirmed that the temperature rose well from a minimum value of 2.5 kHz according to the thickness. It was confirmed that the temperature rise rate increased only when the frequency was increased as the thickness became thinner, and it was confirmed that a phenomenon where the surface melted occurred if the frequency was too high when the thickness was thick. As a result of the test, it was determined that a case where the frequency was 2.5 kHz was suitable, and thus this was selected to perform induction heating.

**[Table 1]**

| Outer Shell Thickness (mm) | Minimum (kHz) | Maximum (kHz) |
|---|---|---|
| 1 | 2.5 | 150 |
| 0.5 | 2.5 | 600 |
| 0.2 | 2.5 | 3000 |
| 0.1 | 2.5 | 3000 |
| 0.05 | 2.5 | 3000 |

Thereafter, particle size separation and magnetic separation were performed on the crushed product to finally recover a recovered material. Here, the recovery rate was calculated by performing heating at 1350°C for about 30 minutes. It appeared to be about a level of 80% compared to an initial weight of the battery. It is determined that 20% was discharged to the atmosphere as the electrolyte was vaporized and carbon of the negative electrode material reduced oxide of the positive electrode material to be converted into carbon dioxide and carbon monoxide and gasified.

The reduction rate of nickel-cobalt according to reaction time was evaluated. For the reduction rate, a weight magnetically separated after heating at 1350°C for 60 minutes was calculated as a standard value. When heated for only 10 minutes, heat did not penetrate into the inside of the battery, so it was confirmed that the positive electrode material remained scorched inside as it was and did not react to magnetic force.

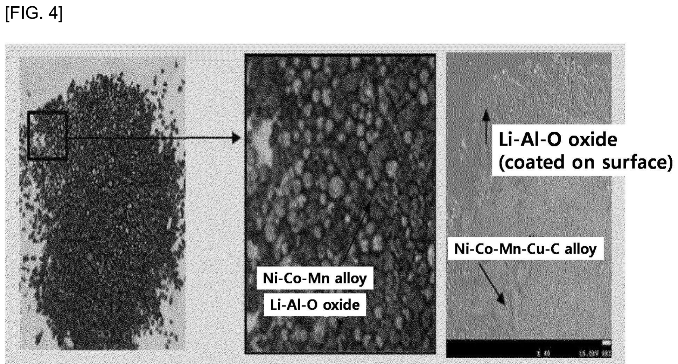

FIG. 4 shows a recovered material obtained by magnetically separating the crushed product of FIG. 3. A nickel-cobalt-copper-manganese alloy component in a circular or oval shape could be observed. As a result of measuring components using an electron microscope, it can be seen that a lithium compound is coated on the outside of the alloy.

The magnetically separated sample was at a level of about 70% compared to the standard value. When reacted for 15 minutes, about 90% or more was separated by magnetic force, and at 20 minutes or more, it showed an equivalent level of 98 to 100%. It is determined that 98% or more is an error appearing in the recovery process. FIG. 2 is data showing a reduction rate according to a heating time of a cylindrical battery when using an 18650 battery at a temperature of 700°C.

The present invention is not limited to the above embodiments but may be manufactured in various different forms, and those skilled in the art to which the present invention pertains will understand that the present invention may be implemented in other specific forms without changing the technical spirit or essential features of the present invention. Therefore, it should be understood that the embodiments described above are illustrative in all respects and not restrictive.

### [Description of Reference Numerals]

1: Cylindrical battery
2: Gas vent

## Claims

1. A method for recycling a cylindrical battery, comprising: preparing a cylindrical battery; forming at least one gas vent on a surface of the cylindrical battery; heating the cylindrical battery having the gas vent formed thereon; crushing the heated cylindrical battery to obtain a crushed product; and separating the crushed product to obtain a recovered material.

2. The method for recycling a cylindrical battery of claim 1, wherein: the step of forming the gas vent comprises forming at least one hole on the surface of the cylindrical battery.

3. The method for recycling a cylindrical battery of claim 1, wherein: the step of forming the gas vent comprises cutting a portion of the cylindrical battery.

4. The method for recycling a cylindrical battery of claim 2, further comprising: a step of cutting a portion of the cylindrical battery before the step of crushing the heated cylindrical battery to obtain a crushed product.

5. The method for recycling a cylindrical battery of claim 2, wherein: in the step of forming the hole, the hole is formed to have a cross-sectional area of 0.01 mm² or more.

6. The method for recycling a cylindrical battery of claim 5, wherein: the hole is formed to have a cross-sectional area of 0.2 to 10 mm².

7. The method for recycling a cylindrical battery of claim 2, wherein: the hole is formed to penetrate an outer shell of the cylindrical battery.

8. The method for recycling a cylindrical battery of claim 1, wherein: when a thickness of an outer shell of the cylindrical battery is 0.05 to 1 mm, the outer shell includes an alloy having an Fe content of 60 at% or more.

9. The method for recycling a cylindrical battery of claim 1, wherein: the step of heating the cylindrical battery is performed at 700°C to 1400°C.

10. The method for recycling a cylindrical battery of claim 1, wherein: the step of heating the cylindrical battery having the gas vent formed thereon is performed using induction heating.

11. The method for recycling a cylindrical battery of claim 10, wherein: a frequency of the induction heating is 2.5 kHz to 3 MHz.

12. The method for recycling a cylindrical battery of claim 1, wherein: the step of heating the cylindrical battery is performed for 10 to 100 minutes.

13. The method for recycling a cylindrical battery of claim 1, further comprising: a step of cooling the heated cylindrical battery before the step of crushing the heated cylindrical battery to obtain a crushed product.

14. The method for recycling a cylindrical battery of claim 1, wherein: the step of separating the crushed product to obtain a recovered material is performed by at least one separation method selected from the group consisting of particle size separation, magnetic separation, and specific gravity separation.

15. The method for recycling a cylindrical battery of claim 14, wherein: the step of separating the crushed product to obtain a recovered material comprises performing the magnetic separation first, and then performing the particle size separation.

16. The method for recycling a cylindrical battery of claim 1, wherein: the recovered material comprises a valuable metal.

17. The method for recycling a cylindrical battery of claim 16, wherein: the valuable metal comprises one or more selected from the group consisting of nickel, cobalt, manganese, and copper.

18. The method for recycling a cylindrical battery of claim 17, wherein: the valuable metal comprises nickel, cobalt, manganese, and copper.

19. The method for recycling a cylindrical battery of claim 18, wherein: the valuable metal comprises one or more selected from the group consisting of carbon, copper, a lithium-aluminum-oxygen alloy, a lithium-fluorine alloy, and a lithium-carbon-oxygen alloy.
